Europäisches Patentamt

European Patent Office

Office européen des brevets

(11) Veröffentlichungsnummer: **0 518 161 A1**

(12) **EUROPÄISCHE PATENTANMELDUNG**

(21) Anmeldenummer: **92109225.0**

(51) Int. Cl.5: **B60K 15/03**, B60N 2/38

(22) Anmeldetag: **02.06.92**

(30) Priorität: **14.06.91 US 717786**

(43) Veröffentlichungstag der Anmeldung:
**16.12.92 Patentblatt 92/51**

(84) Benannte Vertragsstaaten:
**DE ES FR GB IT SE**

(71) Anmelder: **DEERE & COMPANY**
**1 John Deere Road**
**Moline, Illinois 61265(US)**

(72) Erfinder: **Teal, Richard Donald**
**510 S. Ridge Circle**
**Horicon, Wisconsin 53032(US)**
Erfinder: **Hutchison, Wayne Robert**
**N7840 Hwy. TW.**
**Mayville, Wisconsin 53050(US)**

Erfinder: **Moore, Earl Thomas**
**3717 Fuller Drive**
**Midland, Michigan 48640(US)**
Erfinder: **Lorenzo, Luis**
**1305 Sylvan Lane**
**Midland, Michigan 48640(US)**
Erfinder: **Wasson, Steven Charles**
**4422 W. Wackerly**
**Midland, Michigan 48667(US)**
Erfinder: **Daniel, David Robert**
**4601 Oakridge Drive**
**Midland, Michigan 48640(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Sitz.**

(57) Ein Sitz mit einer Rückenlehne weist eine erste und eine zweite im wesentlichen L-förmig ausgebildete Sitzschale (32, 34) mit je einem horizontal verlaufenden und einem nach oben gerichteten Abschnitt auf, wobei die erste Sitzschale (32) mit der zweiten Sitzschale (34) lösbar verbunden ist und beide Sitzschalen (32, 34) im zusammengebauten Zustand zwischen ihren nach oben gerichteten Abschnitten einen Hohlraum bilden, in den ein separater Brennstofftank (26) eingesetzt ist.

Fig. 2

Die Erfindung bezieht sich auf einen Sitz mit einer Rückenlehne.

Insbesondere bei Fahrzeugen, die in der Garten- und Rasenpflege eingesetzt werden, befindet sich der Fahrersitz oberhalb eines Verbrennungsmotors. Der Fahrersitz dient ausschließlich zur Aufnahme eines Fahrers. Ein Brennstofftank ist in der Regel irgendwo im Fahrzeugaufbau vorgesehen, und zwar nach Möglichkeit auf einer Höhe, die derjenigen des Verbrennungsmotors entspricht. Hierdurch ist der Brennstofftank beim Befüllen schlecht zugänglich und es können beim Befüllen Beschädigungen auftreten. Hinzu kommt, daß derartige kleine Fahrzeuge vielfach nicht mit einer Förderpumpe für den Brennstoff ausgerüstet sind, der nur auf Grund der Schwerkraft zum Vergaser gelangt. Bei Arbeiten an Hängen ist dann eine betriebssichere Brennstoffversorgung nicht immer gewährleistet. Setzt man den Brennstofftank höher, so kann diese Maßnahme das Erscheinungsbild beeinträchtigen.

Bei Leichtflugzeugen (US-A-3 627 378) ist es bereits bekannt, den Pilotensitz als Brennstofftank auszubilden. Der Brennstofftank ist dann allerdings nicht als gesondertes Einzelteil ausgebildet.

Die mit der Erfindung zu lösende Aufgabe wird darin gesehen, einen Sitz derart auszubilden, daß er außer seiner Sitzfunktion auch noch zu anderen Aufgaben herangezogen werden kann. Diese Aufgabe ist nach der Erfindung durch eine erste und eine zweite im wesentlichen L-förmig ausgebildete Sitzschale mit je einem horizontal verlaufenden und einem nach oben gerichteten Abschnitt gelöst worden, wobei die erste Sitzschale mit der zweiten Sitzschale lösbar verbunden ist und beide Sitzschalen im zusammengebauten Zustand zwischen ihren nach oben gerichteten Abschnitten einen Hohlraum bilden, in den ein separater Brennstofftank eingesetzt ist. Auf diese Weise kann zwischen den Rückenlehnen der beiden Sitzschalen ein Brennstofftank derart aufgenommen werden, daß das äußere Erscheinungsbild nicht gestört wird, wobei als weiterer Vorteil hinzu kommt, daß der Brennstofftank beim Einsatz in einem antreibbaren Gerät, so hoch liegt, daß der Brennstoff ohne zur Hilfenahme einer Förderpumpe allein durch seine Schwerkraft unter den meisten Betriebsbedingungen störungsfrei zu dem Vergaser des Verbrennungsmotors gelangen kann. Der Brennstofftank kann leicht zu Wartungszwecken aus dem Sitz ausgebaut werden.

Nach einem weiteren Vorschlag der Erfindung, ist der Sitz für ein Fahrzeug konzipiert und so angeordnet, daß ein Verbrennungsmotor auch beim Einsatz des Fahrzeuges an Hängen störungsfrei mit Brennstoff versorgt werden kann. Hierzu sieht die Erfindung vor, daß die zweite Sitzschale mit einem Fahrzeug verbindbar ist, dessen Verbrennungsmotor in einer Ebene unterhalb des Brennstofftankes angeordnet ist.

Es wird ferner vorgeschlagen, daß der Brennstofftank gekapselt wird, weshalb die beiden Sitzschalen derart ausgebildet sein sollten, daß sie im zusammengebauten Zustand den Brennstofftank vollständig ummanteln, wobei in einer Sitzschale im Bereich ihres nach oben gerichteten Abschnittes eine Öffnung für den Einfüllstutzen des Brennstofftankes vorgesehen ist. Damit ist der Brennstofftank zum Befüllen auch leicht zugänglich.

Eine einfache und damit auch kostengünstige Bauweise läßt sich dadurch erreichen, daß die Sitzschalen und der Brennstofftank aus Kunststoff bestehen, wobei der Brennstofftank im Blasverfahren herstellbar ist. Dieses Verfahren bringt den weiteren Vorteil, daß der Brennstofftank ohne Nähte gefertigt werden kann, so daß die Gefahr möglicher Leckstellen weitgehend ausgeschlossen ist.

Im Einzelnen ist erfindungsgemäß ferner vorgesehen, daß die zweite Sitzschale den Brennstofftank aufnimmt und mit einer Einrichtung zum Auffangen und Beseitigen von überlaufendem Brennstoff versehen ist. Damit kann beim Einfüllen etwa verschütteter Brennstoff nicht in den Fahrzeugaufbau gelangen und dort etwaige Schäden verursachen.

Auf eine Benzinuhr kann verzichtet werden, wenn außerdem der Brennstofftank zumindest in einem Teilbereich aus einem durchsichtigen Kunststoff hergestellt ist und eine der Sitzschalen mindestens eine im zusammengebauten Zustand zu diesem Teilbereich ausgerichtete Schauöffnung aufweist. Die Bedienungsperson kann dann den jeweiligen Befüllungsstand durch Inaugenscheinnahme überprüfen.

Eine einfache Befestigungsweise, die auf den Tank auch noch stabilisierend wirkt, kann dadurch erreicht werden, daß die erste Sitzschale im Bereich ihres nach oben gerichteten Abschnittes an ihrer Rückseite mit mindestens einem nach rückwärts vorspringenden ersten Führungsteil und die zweite Sitzschale im Bereich ihres nach oben gerichteten Abschnittes an ihrer Vorderseite mit einem zu dem ersten Teil im zusammengebauten Zustand ausgerichteten und nach vorne vorspringenden zweiten Teil versehen ist, wobei der Brennstofftank an seiner Vorder- und Rückseite mit den ersten und den zweiten Teil aufnehmenden Einbuchtungen versehen ist, die voneinander durch einen Steg getrennt sind. Durch äußere Einflüsse kann der Brennstofftank auch nicht zusammengepreßt werden, wenn ferner noch die Enden des ersten und des zweiten Teiles im zusammengebauten Zustand gegen den Steg anliegen, der mittig im Brennstofftank angeordnet ist.

Zweckmäßig können die erste und zweite Sitzschale zumindest im Bereich des Steges mit dem Brennstofftank verbunden sein, wobei weitere Verbindungsstellen durchaus denkbar sind. Ein solcher mit einem Brennstofftank ausgerüsteter Sitz eignet sich besonders gut für den Einbau an einem in der Garten- und Rasenpflege einsetzbaren Kleinschlepper, bei dem die Raumverhältnisse zum Unterbringen der einzelnen Aggregate sehr begrenzt sind.

In der Zeichnung ist ein nachfolgend näher erläutertes Ausführungsbeispiel der Erfindung dargestellt. Es zeigt:

Fig. 1    ein mit einem Fahrzeugsitz ausgerüstes Fahrzeug in perspektivischer Darstellung,

Fig. 2    den Fahrzeugsitz in auseinandergezogener Darstellung,

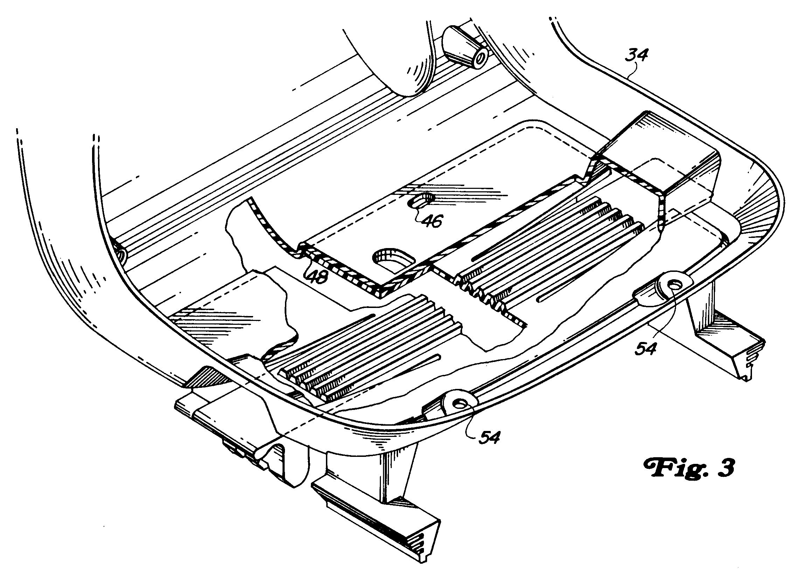

Fig. 3    die untere Sitzschale im Bereich ihres horizontalen Abschnittes und von oben gesehen,

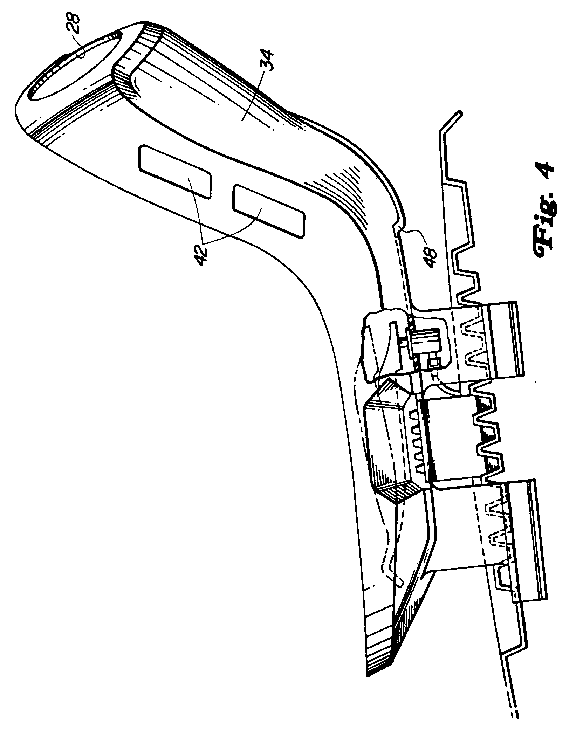

Fig. 4    die untere Sitzschale in Seitenansicht und

Fig. 5    den Sitz von unten mit einer Schraubverbindung im Schnitt.

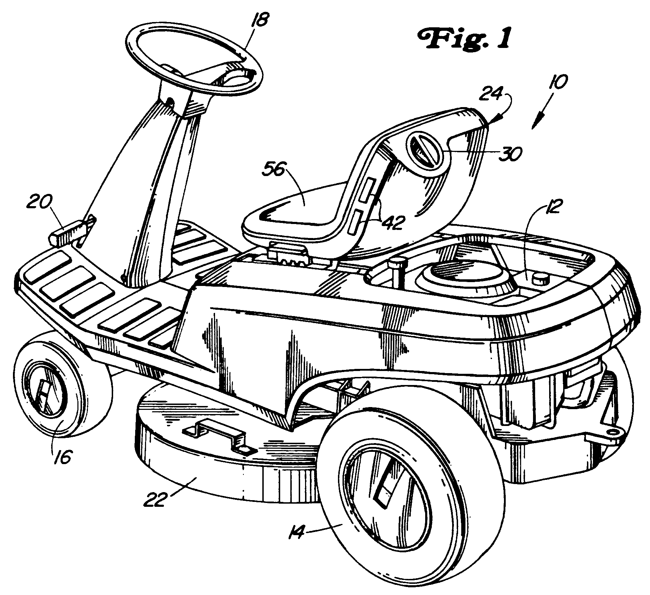

In Fig. 1 der Zeichnung ist ein in der Grundstücks- und Rasenpflege einsetzbares Fahrzeug mit 10 bezeichnet. Es ist an seinem rückwärtigen Ende mit einem Verbrennungsmotor 12 versehen, der rückwärtige Laufräder 14 antreibt. In Fig. 1 sind ferner vordere lenkbare Laufräder 16, ein Lenkrad 18, Kupplungs- und Bremspedale 20 und ein zwischen den Achsen angeordnetes Mähwerk 22 zu erkennen. Auf dem Gehäuseaufbau des Fahrzeuges 10 befindet sich ein Fahrzeugsitz 24, der einen Brennstofftank 26 aufnimmt. Dieser hat einen Einfüllstutzen 28, der an der oberen rückwärtigen Kante des Sitzes vorgesehen und durch einen Tankdeckel 30 verschließbar ist.

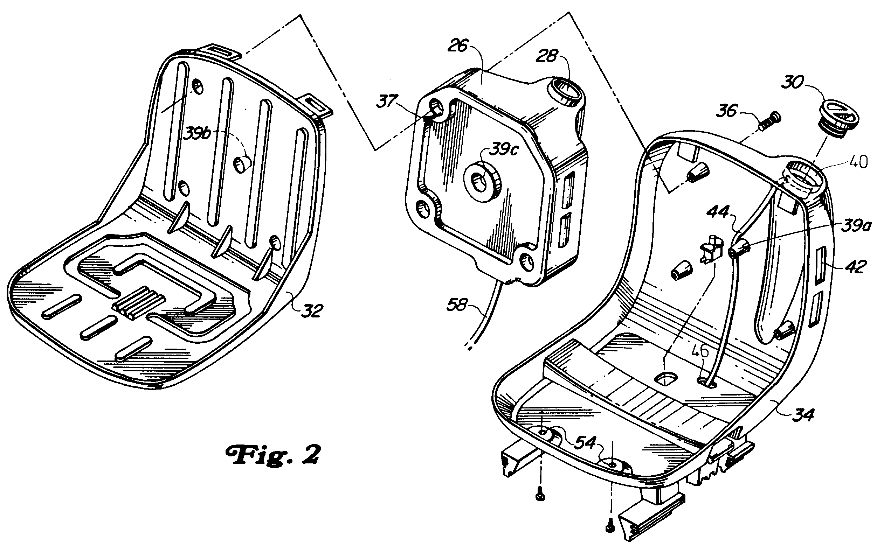

In Fig. 2 ist der Sitz 24 in einer auseinandergezogenen Darstellung wiedergegeben. Man erkennt, daß der Sitz aus einer ersten und einer zweiten Sitzschale 32 und 34 besteht, die jeweils L-förmig ausgebildet sind und einen horizontalen Abschnitt zur Aufnahme des Fahrers und ein nach oben gerichteten Abschnitt aufweisen, die im zusammengebauten Zustand als Rückenlehne dienen und zwischen sich den Brennstofftank 26 aufnehmen. Dieser besteht ebenso wie die Sitzschalen, die im Spritzgußverfahren hergestellt werden, aus Kunststoff und wird in einem Rotationsverfahren oder Blasverfahren hergestellt. Solche Verfahren haben den Vorteil, daß das Erzeugnis einstückig hergestellt ist und damit keine zusammenfügbare Nähte aufweist.

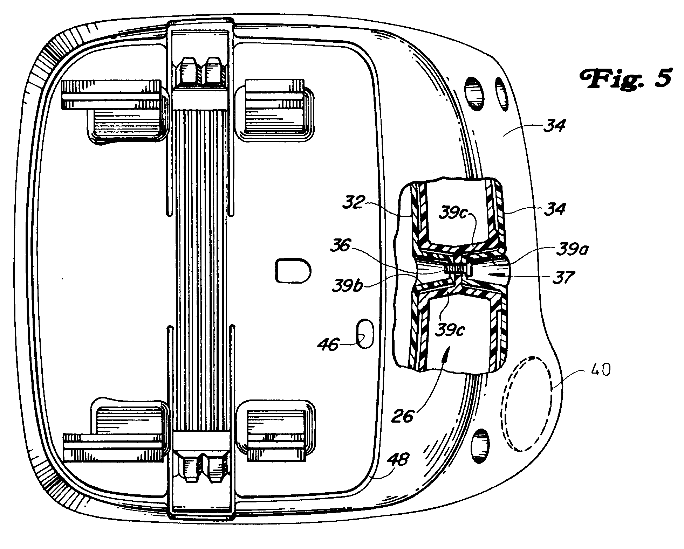

Der Brennstofftank hat eine derartige Form, daß er im zusammengebauten Zustand der beiden Sitzschalen relativ genau in den Freiraum zwischen den beiden nach oben gerichteten Abschnitten der Sitzschalen paßt, die ihn nach dem Einbau vollständig bis auf eine Öffnung 40 für den Einfüllstutzen 28 ummanteln. Der Tank ist damit vollständig gekapselt, kann aber, wenn dies erforderlich werden sollte, zu Wartungszwecken leicht wieder ausgebaut werden. Der Brennstofftank 26 ist, wie aus Fig. 2 zu ersehen ist, etwa rechteckförmig ausgebildet und wird beim Einbau zunächst in die zweite Sitzschale 34, die mit einem Rahmen des Fahrzeuges längsverschiebbar verbunden ist, eingesetzt. Wie aus den Fig. 2 und 5 zu entnehmen ist, sind an der Vorderseite des hochstehenden Abschnittes der zweiten Sitzschale 34 mehrere nach vorne vorspringende Führungsteile 39a vorgesehen. Diese haben eine konische Form und jeweils eine Längsöffnung. Der Brennstofftank 26 ist mit entsprechenden Einbuchtungen 39c versehen, die diese Führungsteile 39a aufnehmen können. Auf diese Weise kann der Brennstofftank leicht auf die Führungsteile aufgesetzt werden. Eins der Führungsteile 39a ist etwa in der Mitte des nach oben gerichteten Abschnittes der zweiten Sitzschale 34 vorgesehen und wirkt mit einem nach rückwärts vorspringenden Führungsteil 39b an der Rückseite des nach oben gerichteten Abschnittes der ersten Sitzschale 32 zusammen, um zu verhindern, daß der Brennstofftank 26 im Einsatz zusammengepreßt werden könnte. Der Brennstofftank weist deshalb noch auf seiner der ersten Sitzschale 32 zugelegenen Seite eine weitere Einbuchtung auf, in der der Führungsteil 39b der ersten Sitzschale aufnehmbar ist. Die beiden Einbuchtungen an dem Brennstofftank 26 liegen sich gegenüber und sind nur durch einen als Steg ausgebildeten mittleren Wandteil voneinander getrennt, gegen den im zusammengebauten Zustand die beiden Führungsteile 39a, b mit ihren Stirnseiten anliegen. Der Brennstofftank kann damit nicht durch von außen einwirkende Kräfte zusammengedrückt werden, wodurch Brennstoff austreten oder der Tank selbst beschädigt werden könnte. Die beiden sich gegenüberliegenden Einbuchtungen machen den Brennstofftank auch verwindungssteif. Die Verbindung der beiden Sitzschalen 32 und 34 mit dem Brennstofftank kann über Schrauben 36 erfolgen.

Beim Ausführungsbeispiel weist die zweite Sitzschale 34 in ihrer seitlichen Begrenzung noch Schaufenster 42 auf, durch die der Füllstand des Brennstofftankes kontrolliert werden kann, der hierzu zumindest in diesem Bereich aus einem durchsichtigen Werkstoff gebildet ist. Eine Benzinuhr ist damit nicht erforderlich.

Im Bereich des Einfüllstutzens 28 des Brennstofftankes 26 ist noch eine Überlauf- und Entlüftungsleitung 44 angeschlossen, die zusammen mit einer Brennstoffleitung 58 durch eine Öffnung 46 in der zweiten Sitzschale 34 nach außen geführt ist.

In einem unteren Bereich, etwa am Ende des Brennstofftankes 26, ist die zweite Sitzschale 34 noch mit einer im wesentlichen quer verlaufenden Rinne 48 versehen, die etwa beim Befüllen des Brennstofftankes verschütteten Brennstoff auffangen soll. Die Rinne ist so angeordnet, daß sie außen an der Sitzschale ablaufenden Brennstoff sammelt und abführt, so daß dieser nicht unter den Sitz laufen kann, wo der stark belastete Sitzträger vorgesehen ist.

Die beiden horizontal verlaufenden Abschnitte der beiden Sitzschalen 32 und 34 werden über durch Öffnungen 54 in der zweiten Sitzschale 34 steckbare Schrauben miteinander verbunden, und die erste Sitzschale 32 nimmt noch eine Polsterung 56 auf, die bleibend mit der Sitzschale verbunden werden kann.

Zum Befüllen des Brennstofftankes 26 muß lediglich der Tankdeckel 30 entfernt werden. Beim Ausführungsbeispiel ist der Einfüllstutzen 28 auf der linken Fahrzeugseite eingezeichnet. Er kann auch an einer anderen Stelle vorgesehen werden. Doch sollte er sich nicht in der Nähe von Teilen befinden, die im Einsatz heiß werden, wie etwa dem Auspuff.

Der Brennstofftank ist einstückig ohne Nähte ausgebildet, so daß die Gefahr, das er einmal leck werden könnte, gering ist. Dennoch ist die Anordnung so gestaltet, daß der Tank leicht ausgebaut werden kann, wenn dies einmal erforderlich werden sollte. Der Tank befindet sich durch seinen Einbau in den Sitz auf einem Niveau, das höher liegt als der Motor. Der Brennstoff kann deshalb auf Grund der Schwerkraft zum Motor 12 gelangen. Eine Förderpumpe ist nicht erforderlich.

**Patentansprüche**

1. Sitz mit einer Rückenlehne, gekennzeichnet durch eine erste und eine zweite im wesentlichen L-förmig ausgebildete Sitzschale (32, 34) mit je einem horizontal verlaufenden und einem nach oben gerichteten Abschnitt, wobei die erste Sitzschale (32) mit der zweiten Sitzschale (34) lösbar verbunden ist und beide Sitzschalen (32, 34) im zusammengebauten Zustand zwischen ihren nach oben gerichteten Abschnitten einen Hohlraum bilden, in den ein separater Brennstofftank (26) eingesetzt ist.

2. Sitz nach Anspruch 1, dadurch gekennzeichnet, daß die zweite Sitzschale (34) mit einem Fahrzeug (10) verbindbar ist, dessen Verbrennungsmotor (12) in einer Ebene unterhalb des Brennstofftankes (26) angeordnet ist.

3. Sitz nach Anspruch 1, dadurch gekennzeichnet, daß die beiden Sitzschalen (32, 34) derart ausgebildet sind, daß sie im zusammengebauten Zustand den Brennstofftank (26) vollständig ummanteln, wobei in einer Sitzschale im Bereich ihres nach oben gerichteten Abschnittes eine Öffnung (40) für den Einfüllstutzen (28) des Brennstofftankes vorgesehen ist.

4. Sitz nach einem oder mehreren der vorherigen Ansprüche, dadurch gekennzeichnet, daß die Sitzschalen (32, 34) und der Brennstofftank (26) aus Kunststoff bestehen.

5. Sitz nach Anspruch 4, dadurch gekennzeichnet, daß der Brennstofftank (26) im Blasverfahren herstellbar ist.

6. Sitz nach einem oder mehreren der vorherigen Ansprüche, dadurch gekennzeichnet, daß die zweite Sitzschale (34) den Brennstofftank (26) aufnimmt und mit einer Einrichtung (48) zum Auffangen und Beseitigen von überlaufendem Brennstoff versehen ist.

7. Sitz nach Anspruch 5, dadurch gekennzeichnet, daß der Brennstofftank zumindest in einem Teilbereich aus einem durchsichtigen Kunststoff hergestellt ist und eine der Sitzschalen (32, 34) mindestens eine im zusammengebauten Zustand zu diesem Teilbereich ausgerichtete Schauöffnung aufweist.

8. Sitz nach einem oder mehreren der vorherigen Ansprüche, dadurch gekennzeichnet, daß die erste Sitzschale (32) im Bereich ihres nach oben gerichteten Abschnittes an ihrer Rückseite mit mindestens einem nach rückwärts vorspringenden ersten Führungsteil (39b) und die zweite Sitzschale (34) im Bereich ihres nach oben gerichteten Abschnittes an ihrer Vorderseite mit einem zu dem ersten Teil (39b) im zusammengebauten Zustand ausgerichteten und nach vorne vorspringenden zweiten Teil (39a) versehen ist, wobei der Brennstofftank (26) an seiner Vorder- und Rückseite mit den ersten und den zweiten Teil (39a, b) aufnehmenden Einbuchtungen (39c) versehen ist, die voneinander durch einen Steg getrennt sind.

9. Sitz nach Anspruch 8, dadurch gekennzeichnet, daß die Enden des ersten und des zweiten Teiles (39a, b) im zusammengebauten Zustand gegen den Steg anliegen, der mittig im Brennstofftank (26) angeordnet ist.

10. Sitz nach Anspruch 9, dadurch gekennzeichnet, daß die erste und zweite Sitzschale (32, 34) zumindest im Bereich des Steges mit dem Brennstofftank (26) verbunden sind.

*Fig. 1*

Fig. 2

Fig. 3

Fig. 4

Fig. 5

Europäisches Patentamt

# EUROPÄISCHER RECHERCHENBERICHT

Nummer der Anmeldung

EP 92 10 9225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-3 627 378 (BROCK) <br> * das ganze Dokument * <br> --- | 1-4 | B60K15/03 <br> B60N2/38 |
| P,A | US-A-5 025 618 (BRAUN) <br> * das ganze Dokument * <br> --- | 2,4,5,7 | |
| A | PATENT ABSTRACTS OF JAPAN <br> vol. 4, no. 80 (M-15)(562) 10. Juni 1980 <br> & JP-A-55 39 830 ( YAMAHA HATSUDOKI K.K. ) <br> 21. März 1980 <br> * Zusammenfassung * <br> --- | 1,3,4 | |
| A | EP-A-0 070 999 (BASF AG) <br> * das ganze Dokument * <br> --- | 4,5 | |
| A | DE-C-944 530 (DAIMLER-BENZ AG) <br> * das ganze Dokument * <br> ----- | 3 | |

| | | | RECHERCHIERTE SACHGEBIETE (Int. Cl.5) |
|---|---|---|---|
| | | | B60K <br> A01D <br> B60N |

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1992 | TOPP-BORN S. |